# DEMANDE DE BREVET EUROPEEN

(11) **EP 0 969 376 A1**
(43) Date de publication de la demande: **05.01.2000**
(21) Numéro de dépôt: 99401594.9
(22) Date de dépôt: 25.06.1999
(51) Int. Cl.: G06F 11/34

(54) **Service de données de performance**

(30) Priorité: 30.06.1998 FR 9808299
(71) Demandeur: BULL S.A., 78434 Louveciennes Cedex (FR)
(72) Inventeur: Benbouali, Katia, 92370 Chaville (FR); Ferenczi, Marc, 75019 Paris (FR); Tesseron, Jean-Luc, 78370 Plaisir (FR)
(74) Mandataire: Denis, Hervé

(57) **Abrégé**

La présente invention concerne un service de données de performance d'un système informatique et le procédé de collecte des données de performance.

Le service de données de performance d'un système informatique ayant au moins un outil de collecte de données de performance comprend, d'une part un dictionnaire (200) constitué d'une inscription d'au moins un indicateur de performance (2121) ainsi que la description du type de collecte associée (2123) à l'indicateur par un lien, et d'autre part un serveur qui pilote au moins un outil de collecte de données de performance en fonction de cette description et met à la disposition de l'administrateur dans un format homogène l'ensemble des données de performance recueillies.

## Description

La présente invention concerne un service de données de performance utilisé notamment dans l'administration d'un système informatique pour gérer et visualiser des indicateurs de performance du système.

Un système informatique est constitué d'une multitude de matériels appelés ressources qui sont partagées sur un réseau informatique entre plusieurs utilisateurs. Les ressources et le réseau informatique sont contrôlés et surveillés par un administrateur. Pour surveiller ce réseau et ces ressources, l'administrateur collecte des informations spécifiques, dites données de performance, sur les ressources et/ou le réseau, pour ensuite les exploiter. Pour collecter ces données de performance, l'administrateur a à sa disposition un certain nombre d'outils. Par exemple, la collecte de données de performance est effectuée par un système propre à l'administrateur, appelé service de performance. Ce service utilise un protocole propre, par exemple le protocole CMIP (Common Management Information Protocol), pour envoyer des requêtes périodiques de scrutation (polling) pour collecter les données de performance. L'administrateur peut également utiliser des agents intelligents implémentés sur les ressources du système administré. Ces agents intelligents collectent, par le biais d'un protocole de communication de type SNMP (Simple Network Management Protocol, ou protocole de gestion de réseau simple), les données de performance de la ressource puis les stockent localement, par exemple dans un fichier. Le fichier de données de performance est ensuite transmis vers l'administrateur. Un troisième outil est constitué d'un dispositif d'équipement, de type normalisé sous le nom de sonde RMON (Remote MONitoring) présent sur la ressource à administrer. Cette sonde RMON recueille des données de performance et les stocke localement dans des tables. Ces tables sont ensuite transmises à l'administrateur.

Cependant, ces outils de collecte de données de performance présentent l'inconvénient de fournir des données de performance sous des formats et par l'intermédiaire de protocoles de communication différents. De plus, certains types de collecte ne sont pas adaptés à des taux de scrutation très courts. L'utilisation de ces types de collecte a pour conséquence de surcharger le réseau du système informatique. Or, les systèmes d'administration existants ne sont compatibles qu'avec un seul type d'outil qui réalise un seul type de collecte, c'est-à-dire qu'ils ne fonctionnent qu'avec des agents ou des services propriétaires de collecte de données de performance. Pour accepter un autre type de collecte, le système d'administration doit nécessairement être profondément modifié. Enfin, les systèmes de collecte de données de performance de l'art antérieur nécessitent la connaissance par l'utilisateur du protocole d'interrogation des outils de collecte de données de performance.

La présente invention a donc pour objet de pallier les inconvénients de l'art antérieur en proposant un serveur de données de performance permettant à un système d'administration de gérer des données de performance, quelle que soit la façon dont ces données de performance sont collectée.

Ce but est atteint par le fait que le service de données de performance d'un système informatique surveillé par un système administrateur comprenant au moins un outil de collecte de données de performance est caractérisé en ce qu'il comprend, d'une part un dictionnaire constitué d'une inscription d'au moins un indicateur de performance ainsi que la description du type de collecte associée à l'indicateur par un lien, et d'autre part un serveur qui pilote au moins un outil de collecte de données de performance en fonction de cette description et met à disposition de l'administrateur dans un format homogène l'ensemble des données de performance recueillies.

Selon une autre particularité, les descriptions des indicateurs et des types de collecte sont sous forme d'une base MIB (Management Information Base) structurée en fonction d'au moins un domaine technique de performance, chaque domaine comprenant au moins une classe d'indicateurs correspondant au nom de la donnée de performance.

Selon une autre particularité, chaque classe est associée à une description d'une collecte de données de performance, cette description identifiant, d'une part une MIB dans laquelle chaque indicateur de la classe est mesurable, et d'autre part un noeud correspondant à l'entité du système sur laquelle est lancée la collecte.

Selon une autre particularité, toutes les classes et indicateurs d'un domaine sont créés dans le dictionnaire à partir d'un algorithme d'installation appliqué par le serveur. Cet algorithme associe, pour chaque domaine, un fichier dans lequel sont contenus selon un format particulier la description de chaque classe et indicateur, avec le type de collecte associé à chaque classe. Puis l'algorithme fournit des informations au dictionnaire en fonction des informations lues.

Selon une autre particularité, le serveur crée dans chaque outil de collecte, par l'intermédiaire de l'application de l'algorithme d'installation, les objets nécessaires au pilotage de la collecte par le serveur.

Selon une autre particularité, un algorithme de configuration appliqué par le serveur détermine sur quelle ressource est située chaque MIB, où est mesuré chaque indicateur, ainsi que l'entité ou le noeud où est lancée la collecte.

Selon une autre particularité, un algorithme de configuration appliqué par le serveur crée dans chaque outil de collecte les paramètres d'activation de cet outil.

Selon une autre particularité, le service comprend un algorithme d'activation déclenché lors de l'interrogation d'au moins un indicateur par l'administrateur. Cet algorithme d'activation a comme paramètres : la classe de l'indicateur demandé et le noeud correspondant. Il provoque le démarrage de la collecte de l'indicateur de la classe sur le noeud du réseau, par l'intermédiaire de l'outil de collecte spécifique associé à la classe de l'indicateur demandé.

Selon une autre particularité, les données de performance reçues par le dictionnaire déclenchent un algorithme de réception qui traite les données reçues d'un outil de collecte, pour les convertir dans un format homogène déterminé par le format nécessaire à l'administrateur.

Un deuxième but de l'invention est de proposer un procédé de collecte de données de performance d'un service de données de performance fournissant des données de performance dans un format homogène quel que soit le moyen de collecte de ces données de performance.

Ce deuxième but est atteint par le fait que le procédé de collecte de données de performance d'un service de données de performance comprend :
- une étape d'installation comprenant l'application d'un premier algorithme définissant dans un dictionnaire, à partir d'un fichier de description, au moins un domaine de données de performance, chaque domaine comprenant au moins une classe d'indicateurs de données de performance, chaque classe étant associée à un type de collecte ; et
- une étape de configuration comprenant l'application d'un deuxième algorithme permettant de mémoriser dans une MIB les ressources exploitées sur le réseau par le système et de mémoriser dans le dictionnaire les noeuds du réseau qui n'y figurent pas et les objets de performance sur lesquels sont mesurables les indicateurs de données de performance.

Selon une autre particularité, le procédé comporte
- une étape d'activation comparant l'application d'un troisième algorithme activant l'outil de collecte de données de performance correspondant au type de collecte de la classe d'un indicateur ; et
- une étape de réception comprenant l'application d'un quatrième algorithme déclenché par la réception de données de performance provenant d'un outil de performance. Ce quatrième algorithme convertit les données reçues dans un format homogène déterminé.

Selon une autre particularité, le premier algorithme effectue la configuration d'un outil de collecte par l'intermédiaire des informations du fichier de description.

L'invention a aussi pour objets corollaires le système informatique incorporant le service de données de performance précédent.

D'autres particularités et avantages de la présente invention apparaîtront plus clairement à la lecture de la description ci-après faite en référence aux dessins annexés dans lesquels :
- la figure 1 représente un exemple d'organisation arborescente de la MIB constituant le dictionnaire selon l'invention ; et
- la figure 2 représente un exemple de diagramme de relation entre les différentes entités d'un système informatique utilisant le dictionnaire selon l'invention avec plusieurs types de collecte.

Comme expliqué précédemment, la collecte des données de performance d'un système informatique est réalisée dans l'art antérieur selon un seul type de collecte. Pour réaliser cette collecte, l'administrateur du réseau fait appel à un seul type d'outil, comme, par exemple, une application particulière, à un agent intelligent installé sur la ressource à surveiller ou un dispositif matériel, tel qu'une sonde RMON également installée sur la ressource. Chacun de ces outils possède un fonctionnement propre : il collecte les données de performance sur la ressource de façon particulière et les transmet selon un format et un protocole particuliers.

Le service de données de performance selon l'invention permet d'homogénéiser la visualisation de données de performance d'un système informatique quel que soit le type de collecte utilisé. De plus, les données de performance peuvent être collectées selon plusieurs types de collecte, c'est-à-dire avec différents outils de collecte.

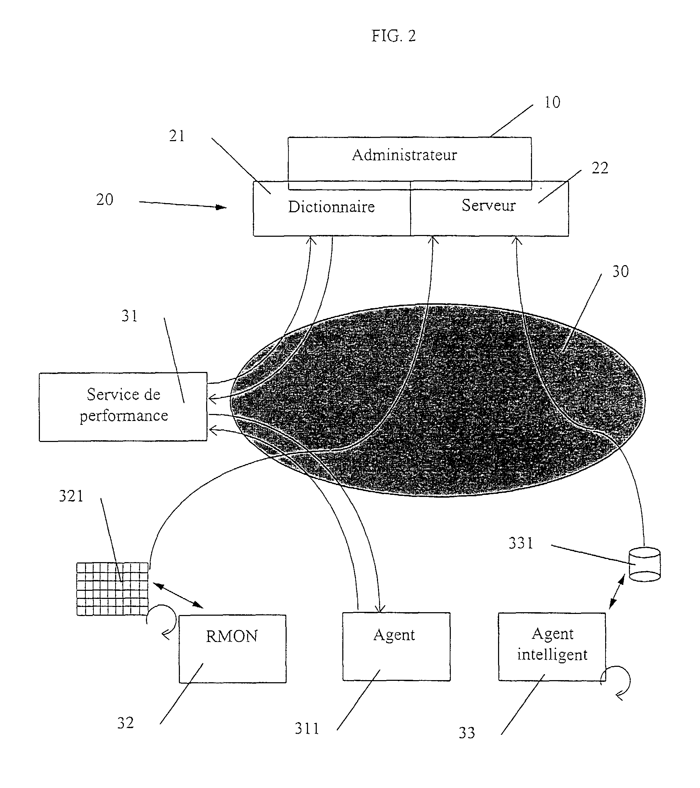

Afin de mieux comprendre le fonctionnement du service de données de performance, la figure 2 représente un exemple de diagramme de relation entre les différentes entités d'un système informatique utilisant le service de données de performance à plusieurs types de collecte selon l'invention. Comme décrit précédemment, le service de performance selon l'invention est destiné à permettre la collecte des données de performance avec plusieurs types d'outils de collecte.

Dans l'exemple de la figure 2, l'administrateur (10) peut collecter des données de performance grâce à trois types d'outils par l'intermédiaire du service (20) selon l'invention comprenant un dictionnaire (21) et un serveur (22) de pilotage de collecte.

Un premier outil (31) est un outil spécifique de collecte du système (30) d'administration du système informatique. Ce premier outil (31) est, par exemple, un gestionnaire d'objets qui contrôle au moins un agent (311) chargé de recueillir les données de performance sur une ressource du système informatique. Le fonctionnement de cet outil (31) est le suivant. Lorsqu'une collecte de données de performance est activée, le premier outil (31) gère de façon autonome l'activation des différents agents (311) installés sur les ressources du système et correspondant aux différentes données de performance demandées. Le premier outil (31) peut administrer une pluralité d'agent (311). Lorsque les données ont été recueillies par cet outil (31), celui-ci transmet une notification selon le protocole du système d'administration (30) à l'administrateur (10). Cette technique présente l'avantage de permettre la gestion d'une pluralité d'agents (311) avec un seul outil (30). Cependant, lorsque le nombre d'indicateurs et donc d'agents augmente, ou lorsque le taux de scrutation des indicateurs est très élevé, le premier outil (31) envoie un nombre important de requêtes vers les agents et un nombre important de notifications vers l'administrateur (10). Cela surcharge le réseau et diminue ses performances.

Un deuxième outil (32) est, par exemple, constitué d'un dispositif d'équipement (32) de type sonde RMON. Une sonde RMON est installée sur la ressource que l'administrateur (10) veut surveiller. La sonde collecte localement, selon une période déterminée, des données de performance de la ressource. La sonde RMON stocke les données de performance collectées sous forme de table (321). Cette table (321) est alors transmise périodiquement à l'administrateur (10).

Un troisième outil (33) est constitué par un agent (33) intelligent. Un agent (33) intelligent est installé sur une ressource et peut collecter plusieurs données de performance sur cette ressource. Cet agent (33) intelligent est capable de façon autonome, de collecter, à des périodes déterminées, des données de performance sur la ressource sur laquelle il est installé. L'agent (33) intelligent mémorise les données de performance recueillie dans un fichier (331) qui est transmis, via le système d'administration (30), vers l'administrateur (10).

Comme il vient d'être décrit, les trois outils (31, 32, 33) de collecte de données de performance ont un fonctionnement particulier et le format des données de performance transmises vers l'administrateur n'est pas homogène. Le service (20) de performance selon l'invention est une interface entre l'administrateur (10) et les différents outils (31, 32, 33) de collecte. Il n'est plus nécessaire pour l'administrateur de connaître le fonctionnement des différents outils de collecte. Il suffit à l'administrateur de formuler une demande de données de performance pour une ressource déterminée du système informatique. Le service selon l'invention gère de façon transparente la collecte de ces données et peut alors les présenter à l'administrateur dans un format homogène.

Le service de performance automatise un certain nombre d'opérations exécutées lors du lancement d'une collecte de données de performance. Notamment, l'algorithme d'installation permet de créer automatiquement une base de données, constituée de la MIB du dictionnaire. La MIB centralise les informations sur les différentes classes d'indicateurs et les types de collecte associés. La configuration et le paramétrage des outils de collecte sont de préférence également effectués de façon automatique par l'intermédiaire de l'algorithme de configuration. Cet algorithme utilise les informations contenues initialement dans le dictionnaire ainsi que celles recueillies pendant la découverte automatique du système informatique. Pour ce faire, le service de performance selon l'invention comprend un dictionnaire et un serveur de pilotage de collecte.

Le Dictionnaire de Performance de l'exemple illustré est une MIB interne de l'administrateur opérant sur un outil ISM, marque déposée par la demanderesse et désignant une gamme de produits et outils d'administration de systèmes (Integrated Systems Management). Il centralise toutes les informations concernant:
- les indicateurs à mesurer (quoi mesurer),
- les sites ou noeuds du réseau (où mesurer), et
- le type de la collecte.(comment mesurer).

Dans l'exemple illustré, la collecte des données de performance est assurée par des agents. Le Dictionnaire est ouvert sur les différentes technologies d'agent. Il permet à des applications clientes de traiter des indicateurs indépendamment du mode de collecte. Pour l'administrateur ISM, on dispose de deux technologies propriétaires :
- Perf-Service : agent central situé sur l'administrateur ISM. La collecte s'effectue par scrutation des agents locaux grâce à des requêtes CMIS (CMIS Query) transmises par la plate-forme (framework) d'lSM à ses agents intégrateurs. Les données, c'est-à-dire les mesures d'indicateurs, sont reçues sous forme de notifications CMIS.
- COACH (technologie Open Agent): agents répartis sur le réseau. La scrutation devient inutile. Les données sont reçues sous forme de fichiers transmis par le protocole FTP.

Les indicateurs sont regroupés en classes. Le type de collecte est un attribut de la classe.
- Un indicateur collecté par l'agent Perf-Service appartient à une classe telle que type = ISM.
- Un indicateur collecté par au moins un agent de COACH appartient à une classe de type COACH.

Un autre attribut de la classe fournit les MlBs qui doivent être installées sur une ressource pour que ses indicateurs y soient mesurables.

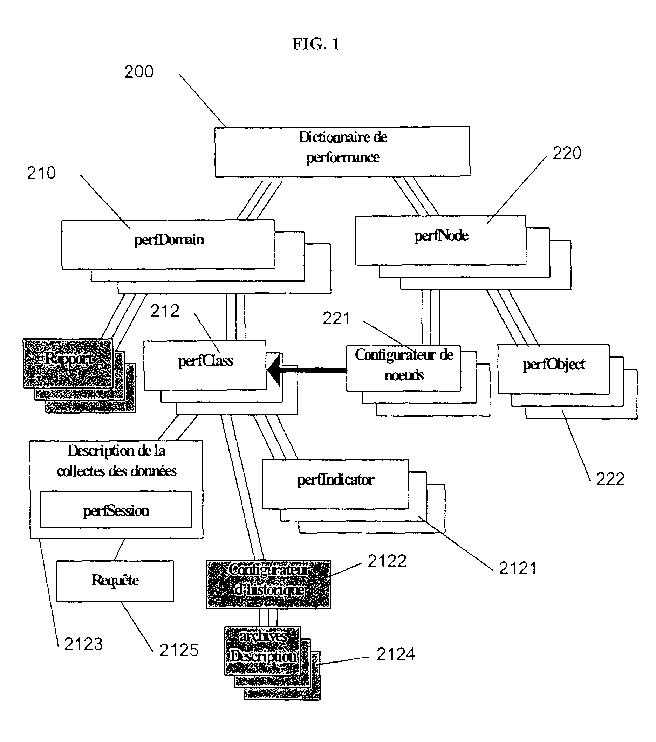

Le dictionnaire inclut une description complète des indicateurs de données de performance. Cette description comprend notamment les indicateurs à mesurer, les sites ou noeuds à partir desquels sont mesurés les indicateurs et le type de collecte de ces indicateurs. Cette description est structurée sous forme d'une base d'administration d'informations (MIB : Management Information base) dont l'arborescence est représentée par la figure 1. Cette MIB (200) constituant le dictionnaire comprend notamment au moins un domaine technique "perfDomain" (210). Ce domaine regroupe au moins une classe "perfClass"(212), qui regroupe elle-même au moins un indicateur de performance (2121) et sa description. Dans l'exemple illustré, chaque classe "perfClass" (212) est associée par un attribut de la classe à un type de collecte particulier qui sera utilisé par le dispositif de description de la collecte de données (2123) pour créer un objet session (perfSession) associé à la classe donnée et à un type de collecte. Pour ce faire dans l'exemple illustré, le type de collecte (2123) est représenté par un premier attribut de la classe et ce type de collecte est décrit dans la MIB du dictionnaire. La classe (212) comprend également un deuxième attribut qui détermine les MIB sur lesquelles sont définis les indicateurs. De manière générale, l'ensemble des indicateurs de performance d'un système informatique sont définis sur des MIB présentes sur des ressources du système informatique. Une collecte est définie par un outil de collecte et par des paramètres de collecte, notamment le taux de scrutation (RATE).

La MIB du dictionnaire de performance (Performance Dictionary) comprend également l'identification d'au moins un noeud (220) du réseau (perfNode) regroupant les objets (222) de performance (perfObject) liés au noeud (220). Un noeud (220) correspond à l'entité où est exécutée la collecte. Par exemple, lorsque l'outil de collecte est un agent, le noeud du réseau correspond au site de fonctionnement de l'agent. Un objet (222) de performance représente un composant de la ressource sur lequel sont mesurées les données de performance. Par exemple, ce composant peut être un système de fichiers, un disque ou interface de réseau. De plus, la MIB contient des éléments (221) configurateurs de noeud (node configurator) qui permettent de faire la relation entre les noeuds (220) et les classes (212) d'indicateurs. En d'autres termes, les éléments (221) permettent de déterminer sur quel noeud (220) déterminé du système informatique est lancée la collecte des indicateurs d'une classe (212) déterminée. Il est clair que la structure de la MIB du dictionnaire est indépendante du type de collecte de données de performance utilisé. La MIB ne contient au contraire que des éléments permettant de décrire les différents types de collecte et les différents indicateurs de données de performance collectés.

De préférence, la MIB comprend pour chaque domaine (210) les informations (2111) nécessaires pour la visualisation des indicateurs de performance et, pour chaque classe (212), un configurateur d'historique (2122) (historisation config) des mesures des indicateurs de performance sur une période déterminée. L'historique comprend la description des archives (2124) (archives description) et permet à l'administrateur d'observer et d'analyser les variations des indicateurs de performance sur la période déterminée.

Le service de données de performance selon l'invention comprend également un serveur destiné à piloter les différents types de collecte. Ce serveur utilise les données stockées dans le dictionnaire pour activer et paramétrer les outils de collecte correspondant aux indicateurs de données de performance demandés par l'administrateur.

Par exemple, le fonctionnement du service de données de performance est le suivant.

Pour créer d'abord et exploiter ensuite ces informations, le Dictionnaire applique de préférence quatre algorithmes :
- algorithme d'installation,
- algorithme de configuration,
- algorithme d'activation,
- algorithme de réception.

Chacun de ces algorithmes est implémenté comme une m-action CMIS. Ils sont de préférence activables à distance par les application clientes.

Dans un premier temps, un algorithme d'installation est appliqué par le serveur du service de données de performance pour définir les indicateurs et les classes d'indicateurs de la MIB du dictionnaire.

Un algorithme d'Installation peut être le suivant.
Paramètre: un fichier texte (package) contenant une suite de déclarations dans une syntaxe prédéfinie.
Résultat: les indicateurs et les classes d'indicateurs définies dans le fichier texte sont créés dans le Dictionnaire.
Étape 1) Analyse syntaxique
Étape 2) Création dans le Dictionnaire des classes et des indicateurs.
Étape 3) Pour chaque classe de type ISM, on crée dans la MIB Perf-Service, un objet session.
On importe ensuite le fichier de la requête; et son nom est enregistré dans la classe.

De préférence, cet algorithme utilise un fichier contenant une suite de déclarations dans un format déterminé. Pour chaque domaine technique de performance, il existe un fichier qui comprend l'identification du domaine technique, ainsi que les classes de ce domaine et une description de chaque indicateur. Ce fichier comprend également pour chaque classe, l'identification de la MIB où sont mesurables les indicateurs de cette classe. Un exemple de fichier est fourni en annexe 1.

Ainsi, dans l'annexe 1, on peut constater qu'il existe plusieurs classes de performance. Par exemple dans le domaine UNIX ®, il existe des classes : CPU, Mémoire et Fichier. Chaque classe comprend plusieurs indicateurs, tels que par exemple : "taux d'occupation", "nombre de processus", "nombre de changements d'état des processus", "nombre de processus créés" et "longueur de la queue en cours d'exécution".

La lecture de ce fichier complète donc la MIB du dictionnaire en enregistrant, d'une part les attributs de chaque classe du domaine décrit dans le fichier, et d'autre part les attributs de chaque indicateur. A chaque indicateur est associé un premier attribut d'identification de la MIB du réseau où l'indicateur est mesuré et accessible et un deuxième attribut de définition du type de collecte (agent intelligent, sonde, etc.) associée à la MIB du réseau.

De plus, certains outils de collecte de données de performance peuvent être configurés lors de l'application de l'algorithme d'installation pour que, lors de l'activation de la collecte, lesdits outils possèdent les éléments nécessaires à la réalisation de la collecte. Cette configuration est réalisée à partir des informations contenues dans le fichier et consiste, par exemple, à créer dans la MIB associée à un outil spécifique de collecte, les objets nécessaires à l'exécution d'une scrutation périodique.

De préférence, le serveur du service de performance exécute également un algorithme de configuration. Cet algorithme est destiné à fournir en permanence la connaissance du système informatique au cours de son évolution au service de performance selon l'invention. En d'autres termes, l'application de cet algorithme donne au service de performance la connaissance des sites ou entités du système informatique où sont situées les MIB dans lesquelles sont mesurables les indicateurs des classes du service de performance. Pour ce faire, la plupart des systèmes d'administration de système informatique en réseau possèdent un service de découverte qui inventorie toutes les bases MlBs présentes sur le réseau, ainsi que leurs situations existantes sur le système informatique.

Le dictionnaire reconnaît les nouveaux objets et les déclare au client. La découverte s'effectue par un service particulier de l'administrateur en surveillant les trames qui circulent sur le réseau et à partir de l'analyse de ces trames, le service détermine quelles sont les machines présentes sur le réseau ainsi que les différents agents présents sur ces machines. Cette analyse est ensuite mémorisée dans une MIB inventaire (ISM Inventory) utilisée lors de l'initialisation du dictionnaire pour que celui-ci découvre le réseau.

L'exécution de l'algorithme de configuration provoque la lecture de la liste des MIB présentes dans la MIB inventaire et la mise à jour de la MIB Dictionnaire. Cet algorithme de configuration analyse la MIB Inventaire, crée les noeuds qui n'existent pas et crée une scrutation périodique (POLL).

L'algorithme permet donc de configurer automatiquement sur le réseau administré par ISM. Il exploite l'Inventaire qui est une MIB ISM construite par l'agent ISM, IpDiscovery.
L'algorithme de configuration peut être du type :
Paramètre : une classe d'indicateurs
Résultat : mise à jour du Dictionnaire de sorte que les indicateurs soient mesurables sur le réseau administré.
L'analyse de l'Inventaire consiste par exemple à :
- Parcourir toutes les ressources ipDevice contenues dans l'Inventaire d'lSM.
- Retenir celles dont l'attribut "mibSupported" comporte les MlBs spécifiées dans la classe d'indicateurs.
   - Pour une classe de collecte de type ISM, les MlBs sont celles qu'interroge la CMIS query utilisée par la classe d'indicateurs.
   - Pour une classe de collecte de type COACH, la MIB demandée est toujours la même, qui est une MIB propriétaire associée à COACH et appelée AIC.

A partir de la liste des ressources IpDevice retenues, le système obtient la liste des ressources snmpSystems configurables.

Par exemple, la création des noeuds consiste pour chaque ressource snmpSystem configurable, à créer un noeud dans le Dictionnaire, si nécessaire, c'est-à-dire si un tel noeud n'existe pas. De même, la création d'une scrutation peut consister à créer dans la MIB Perf-Dictionnaire une scrutation sous la session du service de performance de la classe d'indicateurs. Cette scrutation possède : comme requête, celle de la classe d'indicateurs ; comme variables à notifier, les indicateurs de la classe d'indicateurs ; et comme objet de départ, celui du noeud.

A l'issue de cette lecture, le service de performance mémorise les sites du système où les MlBs correspondant aux classes d'indicateurs mesurables sont installées. Cette mémorisation s'effectue en complétant la MIB du dictionnaire par l'intermédiaire du renseignement des noeuds de la MIB du dictionnaire, ainsi que les objets de performance de la MIB. D'autre part, l'application de l'algorithme de configuration paramètre certains outils de collecte de sorte que, lors de la sollicitation de ces outils pour une collecte de données de performance, ceux-ci soient opérationnels. Ce paramétrage est effectué grâce aux informations sur l'existence des MlBs où sont mesurables les indicateurs. A ce stade, le service de performance selon l'invention est prêt à recevoir des demandes de données de performance de la part de l'administrateur de système informatique.

Une demande de données de performance de l'administrateur provoque l'application d'un algorithme d'activation par le serveur du service de données de performance selon l'invention.

L'algorithme d'activation dépend de la classe du type de collecte de l'indicateur et peut être du type :
Paramètres : un client, un noeud, une classe.
Résultat : démarrage de la collecte des indicateurs de la classe sur le noeud du réseau et enregistrement du client.

Par exemple, pour une classe de type de collecte ISM, la classe est reliée à une session pms-session, qui est un objet de la MIB Perf-Service. Un attribut de la session pms-session signale si elle est active ou non.

Si la session pms-session est inactive, elle est activée par une m-action (terme de protocole CMIP) sur la MIB pms. Celle-ci envoie une notification de fin d'activation et la période de scrutation du noeud est alors positionnée sur celle de la classe.

Si la session pms-session est déjà active, l'algorithme augmente la période de scrutation du noeud pour être celle de la classe.

Pour une classe de type de collecte COACH, l'algorithme lance une action d'activation sur l'agent COACH.

Cet algorithme est destiné à déclencher l'outil de collecte de données de performance correspondant à la classe d'indicateurs demandée par l'administrateur. La demande de l'utilisateur comprend l'identification des indicateurs de performance contenus dans la MIB du dictionnaire. A partir de cette identification, le serveur détermine la classe à laquelle appartient l'indicateur et, compte tenu de la structure du dictionnaire, détermine également la MIB du système sur laquelle est mesurable cet indicateur et le type de collecte. Le serveur connaît également par le dictionnaire quel est le noeud du réseau où est lancée la collecte. Ainsi, le serveur peut activer l'outil de collecte de données de performance associé à la classe de l'indicateur demandé par l'intermédiaire de l'algorithme d'activation correspondant. Pour chaque type de collecte, il existe un algorithme d'activation particulier déclenché par le serveur du service de données de performance selon l'invention. Une fois activé, l'outil de collecte correspondant à la classe de l'indicateur demandée par l'administrateur recueille les données de performance correspondantes. L'outil transmet ensuite au serveur les données de performance recueillies. Ces données sont alors converties dans un format homogène propre au Dictionnaire puis transmises au client qui les a demandées, par l'intermédiaire d'un algorithme de réception exécuté par le serveur. En effet, suivant l'outil activé par l'algorithme d'activation, celui-ci possède un mécanisme et un formalisme particulier de collecte de données. Les données reçues sont donc dans un format homogène, quel que soit le type de collecte.

Ensuite, le ou les indicateurs de performance demandés par l'administrateur sont visualisés, par exemple sur un écran selon un mode de graphisme défini dans la MIB du dictionnaire.

Le service de données de performance permet d'introduire un nouveau type de collecte en introduisant l'algorithme d'activation correspondant dans le serveur.

Il est clair que d'autres modifications à la portée de l'homme de métier entrent dans le cadre de l'invention.

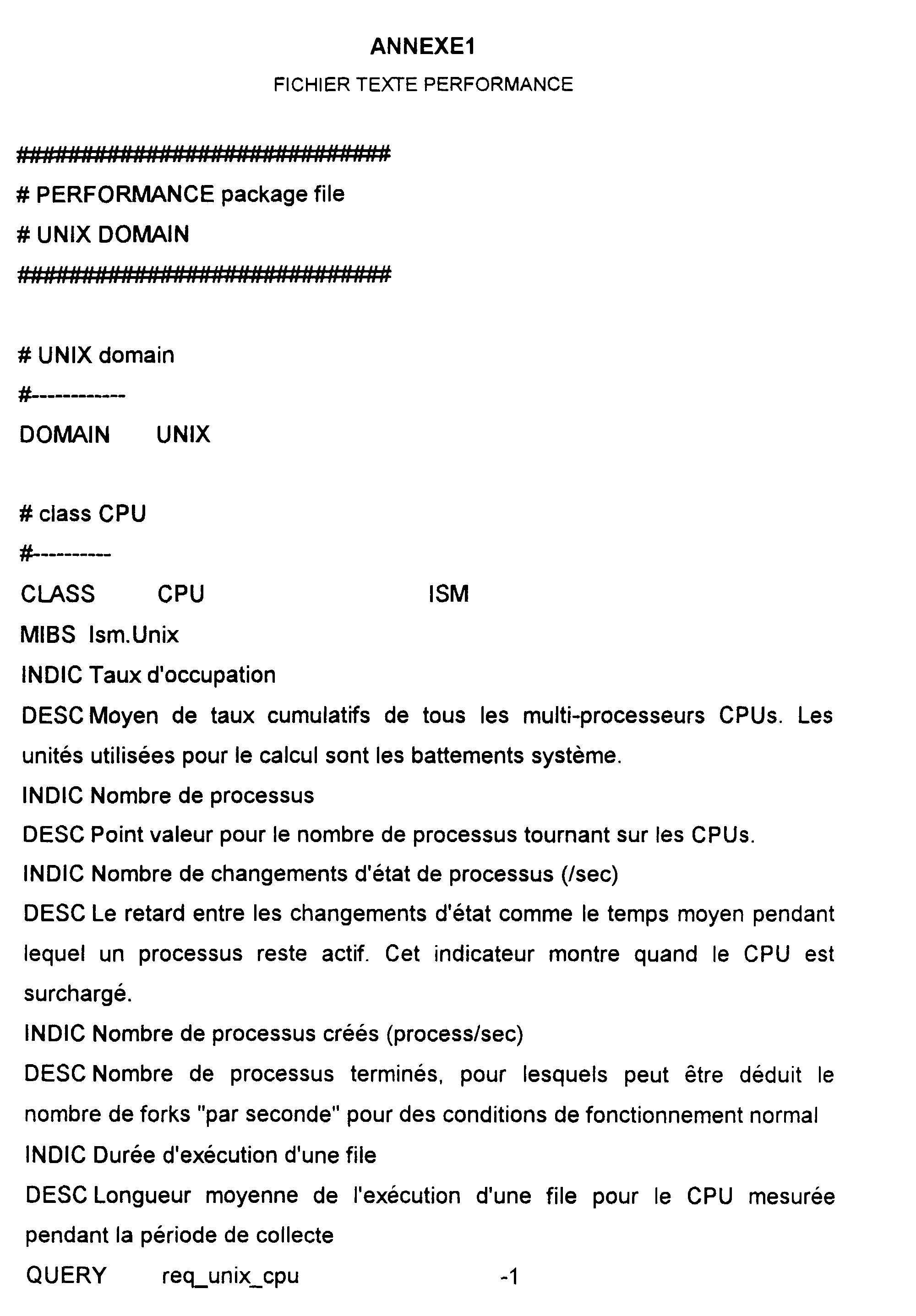

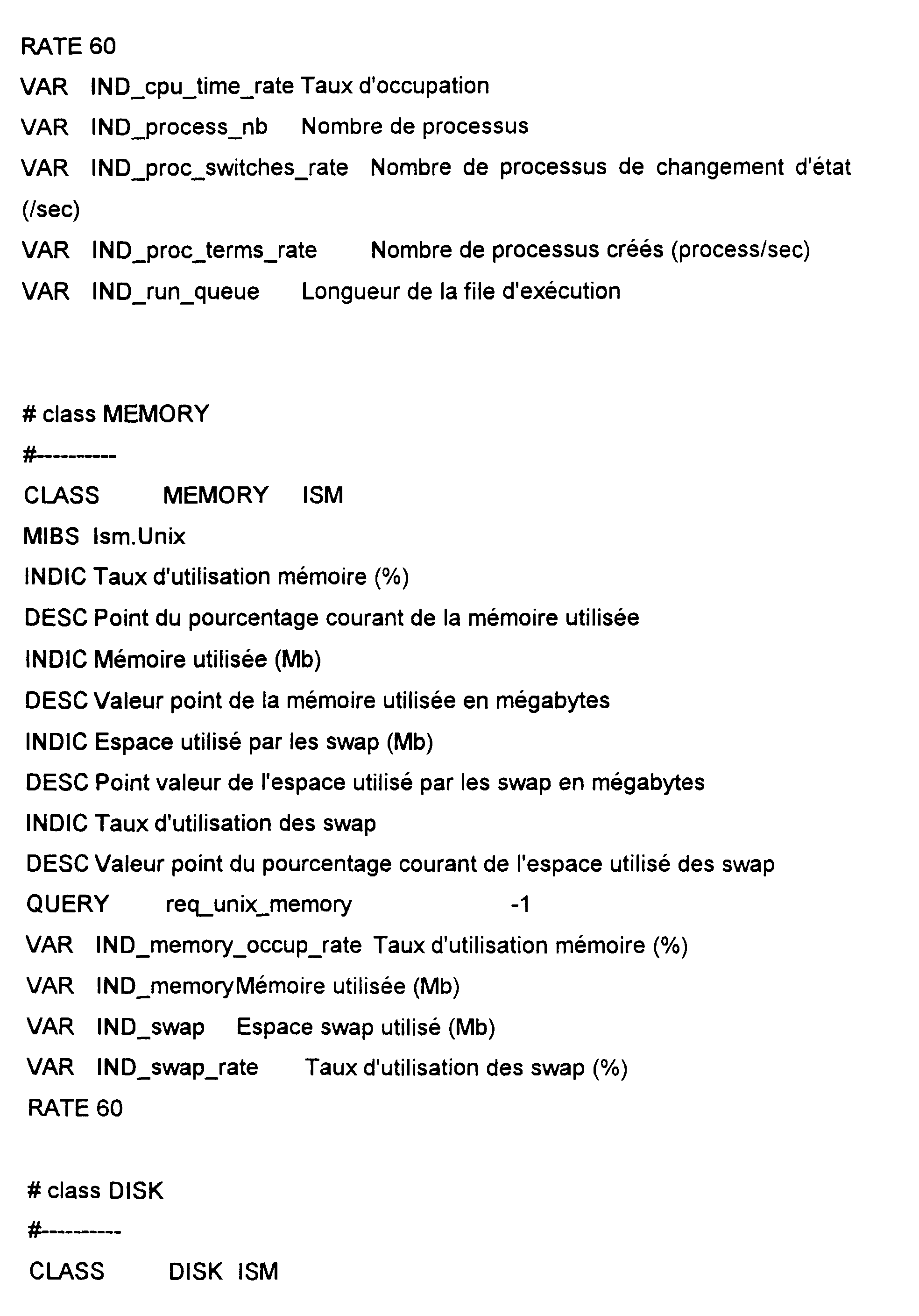

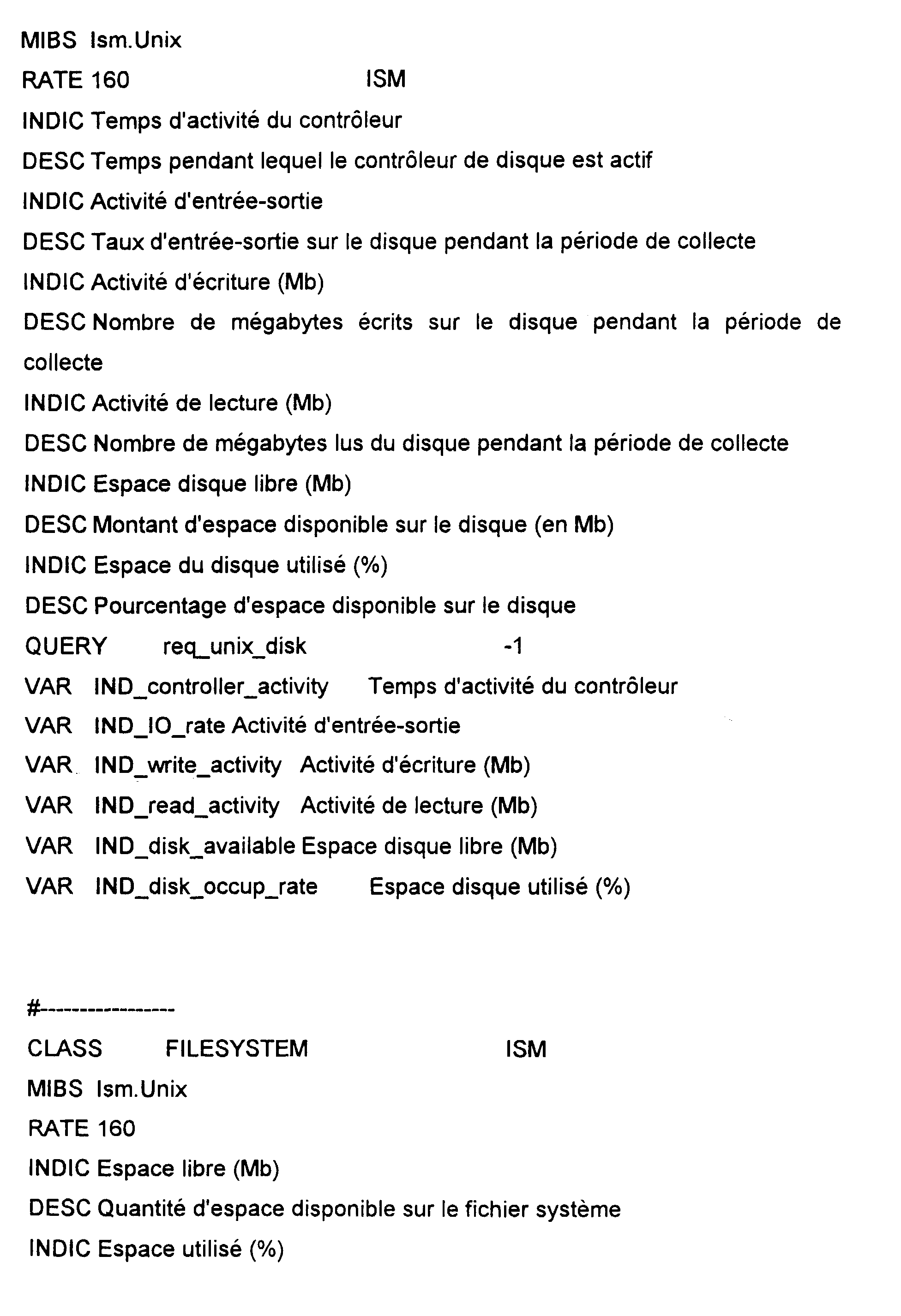

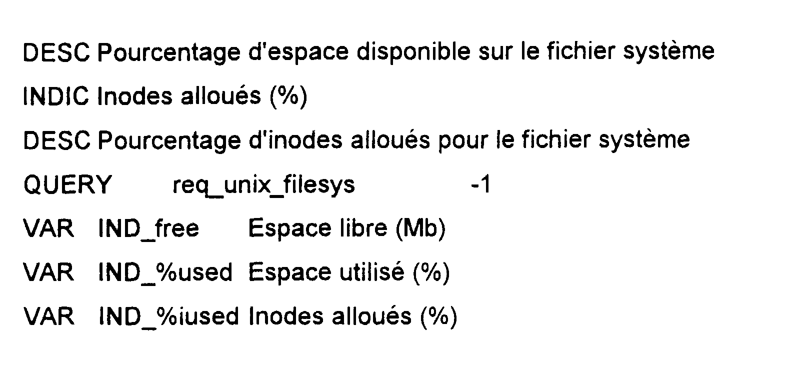

## Revendications

1. Service de données de performance d'un système informatique comprenant au moins un outil de collecte de données de performance, caractérisé en ce qu'il comprend, d'une part un dictionnaire constitué d'une inscription d'au moins un indicateur de performance ainsi que la description du type de collecte associée à l'indicateur par un lien, et d'autre part un serveur qui pilote au moins un outil de collecte de données de performance en fonction de cette description et met à disposition de l'administrateur dans un format homogène l'ensemble des données de performance recueillies.

2. Service de données de performance selon la revendication 1, caractérisé en ce que les descriptions des indicateurs et des types de collecte sont sous forme d'une MIB structurée en fonction d'au moins un domaine technique de performance, chaque domaine comprenant au moins une classe d'indicateurs correspondant au nom de la donnée de performance.

3. Service de données de performance selon la revendication 2, caractérisé en ce que chaque classe est associée à une description d'une collecte de données de performance, cette description identifiant, d'une part une MIB dans laquelle chaque indicateur de la classe est mesurable, et d'autre part un noeud correspondant à l'entité du système sur laquelle est lancée la collecte.

4. Service de données de performance selon la revendication 2 ou 3, caractérisé en ce que toutes les classes et indicateurs d'un domaine sont créés dans le dictionnaire à partir d'un algorithme d'installation appliqué par le serveur, cet algorithme associant, pour chaque domaine, un fichier dans lequel sont contenus dans un format particulier la description de chaque classe et indicateur, avec le type de collecte associée à chaque classe, puis renseignant le dictionnaire en fonction des informations lues.

5. Service de données de performance selon une des revendications 1 à 4, caractérisé en ce que le serveur crée dans chaque outil de collecte, par l'intermédiaire de l'application de l'algorithme d'installation, les objets nécessaires au pilotage de la collecte par le serveur.

6. Service de données de performance selon une des revendications 1 à 5, caractérisé en ce qu'un algorithme de configuration appliqué par le serveur détermine sur quelle ressource est située chaque MIB, où est mesuré chaque indicateur, ainsi que l'entité ou le noeud où est lancée la collecte.

7. Service de données de performance selon une des revendications 1 à 6, caractérisé en ce qu'un algorithme de configuration appliqué par le serveur crée dans chaque outil de collecte les paramètres d'activation de cet outil.

8. Service de données de performance selon une des revendications 1 à 7, caractérisé en ce que le service comprend un algorithme d'activation déclenché lors de l'interrogation d'au moins un indicateur par l'administrateur, cet algorithme d'activation a comme paramètre la classe de l'indicateur demandé, et le noeud correspondant, et provoque le démarrage de la collecte de l'indicateur de la classe sur le noeud du réseau, par l'intermédiaire de l'outil de collecte spécifique associé à la classe de l'indicateur demandé.

9. Service de données de performance selon une des revendications 1 à 8, caractérisé en ce que les données de performance reçues par le dictionnaire déclenchent un algorithme de réception qui traite les données reçues d'un outil de collecte, pour les convertir dans un format homogène déterminé par le format nécessaire à l'administrateur.

10. Procédé de collecte de données de performance d'un service de données de performance d'un système informatique caractérisé en ce qu'il comprend :
- une étape d'installation comprenant l'application d'un premier algorithme définissant dans un dictionnaire, à partir d'un fichier de description, au moins un domaine de données de performance, chaque domaine comprenant au moins une classe d'indicateurs de données de performance, chaque classe étant associée à un type de collecte ; et
- une étape de configuration comprenant l'application d'un deuxième algorithme permettant de mémoriser dans une MIB (INVENTAIRE) les ressources (ipDevice) exploitées sur le réseau par le système et de mémoriser dans le dictionnaire les noeuds du réseau qui n'y figurent pas et les objets de performance sur lesquels sont mesurables les indicateurs de données de performance.

11. Procédé de collecte de données de perforamnce d'un service de données de performance selon la revendication 10, caractérisé en ce qu'il comporte :
- une étape d'activation comparant l'application d'un troisième algorithme activant l'outil de collecte de données de performance correspondant au type de collecte de la classe d'un indicateur; et
- une étape de réception comprenant l'application d'un quatrième algorithme déclenché par la réception de données de performance provenant d'un outil de performance, ce quatrième algorithme convertissant les données reçues dans un format homogène déterminé.

12. Procédé de collecte de données de performance selon la revendication 10, caractérisé en ce que le premier algorithme effectue la configuration d'un outil de collecte par l'intermédiaire des informations du fichier de description.
